(19) Europäisches Patentamt
European Patent Office
Office européen des brevets

(11) EP 2 684 905 A1

(12) **EUROPEAN PATENT APPLICATION**
published in accordance with Art. 153(4) EPC

(43) Date of publication:
**15.01.2014 Bulletin 2014/03**

(21) Application number: **12755341.0**

(22) Date of filing: **08.03.2012**

(51) Int Cl.:
***C08G 61/06*** *(2006.01)* ***B32B 27/00*** *(2006.01)*

(86) International application number:
**PCT/JP2012/055996**

(87) International publication number:
**WO 2012/121342 (13.09.2012 Gazette 2012/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2011 JP 2011050072**

(71) Applicant: **Zeon Corporation**
**Tokyo 100-8246 (JP)**

(72) Inventors:
- **YOSHIWARA, Akihiko**
  **Tokyo 100-8246 (JP)**
- **TSUNOGAE, Yasuo**
  **Tokyo 100-8246 (JP)**

(74) Representative: **Vossius & Partner**
**Siebertstrasse 4**
**81675 München (DE)**

# (54) POLYMERIZABLE COMPOSITION, MOLDED RESIN, AND LAMINATE

(57) A polymerizable composition which contains a cycloolefin monomer and a ruthenium carbene complex which is expressed by the following general formula (I):

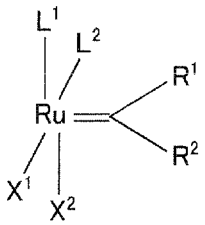

(I)

(in which general formula (I), $R^1$ and $R^2$ respectively independently represent a hydrogen atom, halogen atom, or cyclic or chain $C_1$ to $C_{20}$ hydrocarbon group which may contain a halogen atom, oxygen atom, nitrogen atom, sulfur atom, phosphorus atom, or silicon atom; $X^1$ and $X^2$ respectively independently represent an anionic ligand; $L^1$ and $L^2$ respectively independently represent a neutral electron donor ligand; $L^2$ is a group with a higher three-dimensionally bulk than $L^1$, where $L^1$ and $L^2$ are at cis positions with each other; $R^1$ and $R^2$ may bond with each other to form an aliphatic ring or aromatic ring which may contain a hetero atom; and $R^1$, $R^2$, $X^1$, $X^2$, $L^1$, and $L^2$ may bond with each other in any combination to form a multidentate chelating ligand).

EP 2 684 905 A1

## Description

TECHNICAL FIELD

The present invention relates to a polymerizable composition, a cross-linkable resin shaped article, a cross-linked resin shaped article, and a laminate. More particularly, it relates to a polymerizable composition which has a long pot life and a stable polymerization activity and to a cross-linkable resin shaped article, cross-linked resin shaped article, and laminate which are obtained by using such a polymerizable composition. In particular, the present invention relates to art for providing a polymerizable composition which has a rate of rise in viscosity of the liquid formulation after storage at a temperature of 25°C for 24 hours of 50% or less.

BACKGROUND ART

Up until now, it has been known that by using a ruthenium carbene complex or other metathesis polymerization catalyst to bulk polymerize a cycloolefin monomer, a polymer which exhibits excellent properties in mechanical characteristics and electrical characteristics is obtained.
For example, Patent Document 1 discloses polymerizing a polymerizable composition which contains a norbornene-based monomer, ruthenium carbene complex catalyst, chain transfer agent, and cross-linking agent by metathesis bulk polymerization to obtain a cross-linkable thermoplastic resin, laminating this cross-linkable thermoplastic resin on a substrate etc., and cross-linking the assembly to obtain a composite material.
However, usually, compared with polymerization of an epoxy resin which is used as an insulating material of an electrical circuit board etc., in general, metathesis polymerization by a ruthenium carbene complex catalyst is higher in activity and extremely great in polymerization rate. For this reason, when impregnating a polymerizable composition in a fiber-reinforcing material etc. and forming it into a film shape, the polymerizable composition becomes higher in molecular weight and viscosity before shaping, so there were the problems that impregnation of the polymerizable composition in the fiber-reinforcing material became harder along with the elapse of time and that the obtained cross-linkable thermoplastic resin became unstable in properties.
As opposed to this, for example, Patent Document 2 proposes a polymerizable composition which contains a mixture of a ruthenium carbene complex catalyst which has a chelate ligand structure and a ruthenium carbene complex catalyst which does not have a chelate ligand structure and a cycloolefin monomer. According to this Patent Document 2, by using a metathesis polymerization catalyst comprised of a mixture of a ruthenium carbene complex catalyst which has a chelate ligand structure and a ruthenium carbene complex catalyst which does not have a chelate ligand structure, it is made possible to prevent a rise in viscosity of the polymerizable composition along with the elapse of time.
Further, Patent Document 3 proposes a polymerizable composition which is comprised of a cycloolefin monomer and a ruthenium carbene complex in which a polymerization retardant comprised of a specific phosphine compound is blended. According to this Patent Document 3, by including a polymerization retardant comprised of a specific phosphine compound, it is possible to prevent a rise in viscosity of the polymerizable composition along with the elapse of time.

PRIOR ART DOCUMENTS

PATENT DOCUMENTS

Patent Document 1: Japanese Patent Publication No. 2004-244609A
Patent Document 2: W02009/123209
Patent Document 3: Japanese Patent Publication No. 2008-184565A

DISCLOSURE OF THE INVENTION

PROBLEM TO BE SOLVED BY THE INVENTION

However, the inventors engaged in studies and learned that in the polymerizable composition which is described in the above-mentioned Patent Document 2, while it is possible to suppress the rise in viscosity in a relatively short time (for example, 60 minutes), when making the storage time relatively long (for example, 24 hours), the polymerization reaction ends up advancing and therefore the obtained cross-linkable thermoplastic resin does not have the desired characteristics.
Further, in the polymerizable composition which is described in the above-mentioned Patent Document 3, to

make the pot life 24 hours or more, it is necessary to blend in a large amount of a polymerization retardant comprised of a specific phosphine compound. If blending in a large amount of a polymerization retardant comprised of a specific phosphine compound, there was the problem that the polymerization reaction insufficiently advancd and as a result the obtained cross-linkable thermoplastic resin could not be made one which had the desired characteristics.

An object of the present invention is to provide a polymerizable composition which has a long pot life and a stable polymerization activity and a cross-linkable resin shaped article, cross-linked resin shaped article, and laminate which are obtained using this polymerizable composition.

MEANS FOR SOLVING THE PROBLEMS

The inventors engaged in in-depth research for achieving the above object and as a result discovered that in a polymerizable composition which contains a cycloolefin monomer, by using a polymerization catalyst comprised of a ruthenium carbene complex where two neutral electron donor ligands at the cis positions with respect to each other, formed by groups where one is higher bulk three-dimensionally than the other, are arranged at the ruthenium, it is possible to make the obtained polymerizable composition long in pot life and stable in polymerization activity and thereby completed the present invention.

That is, according to the present invention, there are provided

[1] a polymerizable composition which contains a cycloolefin monomer and a ruthenium carbene complex expressed by the following general formula (I) :

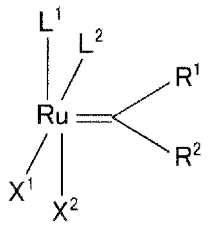

(I)

(in which general formula (I), $R^1$ and $R^2$ respectively independently represent a hydrogen atom, halogen atom, or cyclic or chain $C_1$ to $C_{20}$ hydrocarbon group which may contain a halogen atom, oxygen atom, nitrogen atom, sulfur atom, phosphorus atom, or silicon atom;
$X^1$ and $X^2$ respectively independently represent an anionic ligand;
$L^1$ and $L^2$ respectively independently represent a neutral electron donor ligand;
$L^2$ is a group with a higher three-dimensionally bulk than $L^1$, where $L^1$ and $L^2$ are at cis positions with each other;
$R^1$ and $R^2$ may bond with each other to form an aliphatic ring or aromatic ring which may contain a hetero atom; and
$R^1$, $R^2$, $X^1$, $X^2$, $L^1$, and $L^2$ may bond with each other in any combination to form a multidentate chelating ligand),

[2] the polymerizable composition as set forth in [1] wherein $L^1$ of the ruthenium carbene complex is a phosphines expressed by the following general formula (II).

$$PR^7R^8R^9 \qquad (II)$$

(in which general formula (II), $R^7$, $R^8$, and $R^9$ respectively independently represent an alkyl group, alkoxy group, cycloalkyl group, cycloalkyloxy group, phenyl group, phenyloxy group, benzyl group, or benzyloxy group which may contain a substituent),

[3] the polymerizable composition as set forth in [1] or [2] wherein $L^2$ of the ruthenium carbene complex is a carbene compound,

[4] the polymerizable composition as set forth in any one of [1] to [3] wherein the molar ratio of content of cis forms where $L^1$ and $L^2$ are positioned at the cis positions in the ruthenium carbene complex, that is, the cis ratio, is 90% or more,

[5] the polymerizable composition as set forth in any one of [1] to [4] wherein the rate of rise of viscosity after storage at a temperature of 25°C for 24 hours is 50% or less,

[6] the polymerizable composition as set forth in any one of [1] to [5] which further contains a cross-linking agent,

[7] a cross-linkable resin shaped article obtained by bulk polymerizing the polymerizable composition as set forth in any one of [1] to [6],

[8] a cross-linked resin shaped article obtained by bulk polymerizing and cross-linking the polymerizable composition as set forth in any one of [1] to [6], and

[9] a laminate at least having a layer comprised of the cross-linkable resin shaped article as set forth in [7] or a layer comprised of the cross-linked resin shaped article as set forth in [8].

EFFECTS OF THE INVENTION

According to the present invention, there is provided a polymerizable composition which has a long pot life and which has a stable polymerization activity, in particular, has a rate of rise of viscosity after storage at a temperature of 25°C for 24 hours of 50% or less. Further, according to the present invention, there are provided a cross-linkable resin shaped article, cross-linked resin shaped article, and laminate which are obtained by using this polymerizable composition excellent in shapeability and storage stability and which have excellent dielectric characteristics etc.

DESCRIPTION OF EMBODIMENTS

Below, the present invention will be explained in detail. Note that, below, the cross-linkable resin shaped article and cross-linked resin shaped article will be referred to all together as a "resin shaped article".

(Polymerizable Composition)

The polymerizable composition of the present invention contains a cycloolefin monomer and a ruthenium carbene complex which is expressed by the later explained general formula (1).

(Cycloolefin Monomer)

The cycloolefin monomer which is used in the present invention is a compound which has an alicyclic structure formed by carbon atoms and which has a polymerizable carbon-carbon double bond in the alicyclic structure. In the Description, a "polymerizable carbon-carbon double bond" means a carbon-carbon double bond which participates in chain polymerization (metathesis ring-opening polymerization).

As the alicyclic structure of the cycloolefin monomer, a monocyclic, polycyclic, condensed polycyclic, bridged cyclic, and their combined polycyclic structures etc. may be mentioned. As the cycloolefin monomer which is used in the present invention, from the viewpoint of improving the mechanical strength of the obtained resin shaped article, a polycyclic cycloolefin monomer is preferable. The number of carbon atoms forming the each of cyclic structures is not particularly limited, but is usually 4 to 30, preferably 5 to 20, more preferably 5 to 15. The cycloolefin monomer may have an alkyl group, alkenyl group, alkylidene group, aryl group, or other $C_1$ to $C_{30}$ hydrocarbon group or carboxyl group or acid anhydride group or other polar group as a substituent.

In the present invention, as the cycloolefin monomer, from the viewpoint of improving the mechanical strength of the obtained resin shaped article and laminate, one which has at least one cross-linkable carbon-carbon unsaturated bond is suitably used. In this Description, the "cross-linkable carbon-carbon unsaturated bond" means a carbon-carbon unsaturated bond which does not participate in metathesis ring-opening polymerization but participates in a cross-linking reaction. The "cross-linking reaction" means a reaction which forms a bridge structure. Further, the "cross-linking reaction" usually means a radical cross-linking reaction or metathesis cross-linking reaction, in particular, a radical cross-linking reaction.

As the cross-linkable carbon-carbon unsaturated bond, a carbon-carbon unsaturated bond other than an aromatic carbon-carbon unsaturated bond, that is, an aliphatic carbon-carbon double bond or triple bond, may be mentioned. In the present invention, usually this means an aliphatic carbon-carbon double bond. The position of the unsaturated bond in a cycloolefin monomer which has a cross-linkable carbon-carbon unsaturated bond is not particularly limited. In addition to the inside of the alicyclic structure which is formed by the carbon atoms, it may be present at any position other than the alicyclic structure, for example, the ends or insides of the side chains. For example, the aliphatic carbon-carbon double bond may be present as a vinyl group ($CH_2$=CH-), vinylidene group ($CH_2$=C<), or vinylene group (-CH=CH-). Good radical cross-linkability is exhibited, so presence as a vinyl group and/or vinylidene group is preferable, while presence as a vinylidene group is more preferable.

As the cycloolefin monomer which has at least one cross-linkable carbon-carbon unsaturated bond, in particular, a norbornene-based monomer which has at least one cross-linkable carbon-carbon unsaturated bond is preferable. The "norbornene-based monomer" means a cycloolefin monomer which has a norbornene ring structure in the molecule. For example, norbornenes, dicyclopentadienes, tetracyclododecenes, etc. may be mentioned.

As the cycloolefin monomer which has at least one cross-linkable carbon-carbon unsaturated bond, for example, 3-vinylcyclohexene, 4-vinylcyclohexene, 1,3-cyclopentadiene, 1,3-cyclohexadiene, 1,4-cyclohexadiene, 5-ethyl-1,3-cyclohexadiene, 1,3-cycloheptadiene, 1,3-cyclooctadiene, or other monocyclic cycloolefin monomers; 5-ethylidene-2-norbornene, 5-methylidene-2-norbornene, 5-isopropylidene-2-norbornene, 5-vinylnorbornene, 5-allylnorbornene, 5,6-diethylidene-2-norbornene, dicyclopentadiene, 2,5-norbornadiene, 2-ethylidene-1,4,5,8-dimethano-1,2,3,4,4a,5,8,8a-octahydronaphthalein, or other norbornene-based monomers; etc. may be mentioned. Note that the cycloolefin monomer which has at least one cross-linkable carbon-carbon unsaturated bond may be a compound in which any of a plurality of carbon-carbon unsaturated bonds participates in the metathesis ring-opening polymerization and acts as a polymerizable carbon-carbon double bond and in which the remaining carbon-carbon unsaturated bonds as a result of the metathesis ring-opening polymerization do not participate in the metathesis ring-opening polymerization, but act as cross-linkable carbon-carbon unsaturated bonds. In the compound, any of the plurality of carbon-carbon unsaturated bonds may act as a polymerizable carbon-carbon double bond and, further, any may act as a cross-linkable carbon-carbon unsaturated bond.

In the present invention, as the cycloolefin monomer, in addition to a cycloolefin monomer which has at least one cross-linkable carbon-carbon unsaturated bond, a cycloolefin monomer which does not have a cross-linkable carbon-carbon unsaturated bond may be used.

As the cycloolefin monomer which does not have a cross-linkable carbon-carbon unsaturated bond, for example, cyclopentene, 3-methylcyclopentene, 4-methylcyclopentene, 3,4-dimethylcyclopentene, 3,5-dimethylcyclopentene, 3-chlorocyclopentene, cyclohexene, 3-methylcyclohexene, 4-methylcyclohexene, 3,4-dimethylcyclohexene, 3-chlorocyclohexene, cycloheptene, or other monocyclic cycloolefin monomer; norbornene, 5-methylnorbornene, 5-ethylnorbornene, 5-propylnorbornene, 5,6-dimethylnorbornene, 1-methylnorbornene, 7-methylnorbornene, 5,5,6-trimethylnorbornene, 5-phenylnorbornene, tetracyclododecene, 1,4,5,8-dimethano-1,2,3,4,4a,5,8,8a-octahydronaphthalene, 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2,3-dimethyl-1,4,5,8-dimethano-1,2,3,4,4a,5,8,8a-octahydro-naphthalene, 2-hexyl-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 1,5-dimethyl-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, 1,2-dihydrodicyclopentadiene, 5-chloronorbornene, 5,5-dichloronorbornene, 5-fluoronorbornene, 5,5,6-trifluoro-6-trifluoromethylnorbornene, 5-chloromethylnorbornene, 5-methoxynorbornene, 5,6-dicarboxylnorbornene anhydrate, 5-dimethylaminonorbornene, 5-cyanonorbornene, or other norbornene-based monomers; may be mentioned. Among these, norbornene-based monomers which do not have cross-linkable carbon-carbon unsaturated bonds are preferable.

The above cycloolefin monomers may be used respectively independently or in combinations of two or more types. For example, as the cycloolefin monomer, a mixture of a cycloolefin monomer which has at least one cross-linkable carbon-carbon unsaturated bond and a cycloolefin monomer which does not have a cross-linkable carbon-carbon unsaturated bond may be used.

Among the cycloolefin monomers which is used in the polymerizable composition of the present invention, the ratio of mixture of the cycloolefin monomer which has at least one cross-linkable carbon-carbon unsaturated bond and the cycloolefin monomer which does not have a cross-linkable carbon-carbon unsaturated bond may be suitably selected as desired, but by weight ratio (cycloolefin monomer which has at least one cross-linkable carbon-carbon unsaturated bond/cycloolefin monomer which does not have a cross-linkable carbon-carbon unsaturated bond) is usually 5/95 to 100/0, preferably 10/90 to 95/5, more preferably 15/85 to 90/10 in range. By making this ratio such a range, the obtained resin shaped article and laminate are improved in heat resistance and mechanical strength with a good balance, so this is preferable.

Note that the polymerizable composition of the present invention may contain any monomer which can be copolymerized with the above-mentioned cycloolefin monomer so long as the expression of the advantageous effects of the present invention is not impaired.

(Ruthenium Carbene Complex)

The ruthenium carbene complex which is used in the present invention is a compound expressed by the following general formula (1). Note that the ruthenium carbene complex which is used in the present invention acts as a metathesis polymerization catalyst for polymerizing the above-mentioned cycloolefin monomers by metathesis ring-opening polymerization.

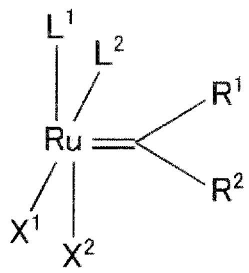

(1)

In the above general formula (1), $R^1$ and $R^2$ respectively independently represent a hydrogen atom, halogen atom, or cyclic or chain $C_1$ to $C_{20}$ hydrocarbon group which may contain a halogen atom, oxygen atom, nitrogen atom, sulfur atom, phosphorus atom, or silicon atom. $X^1$ and $X^2$ respectively independently represent an anionic ligand. $L^1$ and $L^2$ respectively independently represent a neutral electron donor ligand, where $L^2$ is a group with higher bulk three-dimensionally than $L^1$ and where $L^1$ and $L^2$ are at cis positions with respect to each other. Further, $R^1$ and $R^2$ may bond with each other to form an aliphatic ring or aromatic ring which may contain a hetero atom. Furthermore, $R^1$, $R^2$, $X^1$, $X^2$, $L^1$, and $L^2$ may bond with each other in any combination to form a multidentate chelating ligand.

In the present invention, by using the ruthenium carbene complex which is expressed by the above general formula (1), the polymerizable composition of the present invention can be made one with a long pot life and a stable polymerization activity.

The anionic ligands which form $X^1$ and $X^2$ are ligands which have a negative charge when separated from the center metal. As the anionic ligands, for example, halogen atoms such as F, Cl, Br, and I etc. may be mentioned. Among these, Cl (chlorine atom) is preferable.

The neutral electron donor ligands which form $L^1$ and $L^2$ are ligands which have a neutral charge when separated from the center metal. The neutral electron donor ligands are not particularly limited. For example, carbene compounds, carbonyl, amines, pyridines, ethers, nitriles, esters, phosphines, thioethers, aromatic compounds, olefins, isocyanides, thiocyanates, etc. may be mentioned. Among these, carbene compounds, phosphines, ethers, and pyridines are preferable, carbene compounds and phosphines are more preferable, and one which simultaneously has a carbene compound and phosphines, where $L^1$ is the phosphines and $L^2$ is the carbene compound is particularly preferable. As the carbene compound, a carbene compound which contains a hetero atom is preferable.

The hetero atom in the carbene compound which contains a hetero atom means an atom of Group XV and Group XVI of the Periodic Table (Long Form Periodic Table, same below). Specifically, N, O, P, S, As, Se, etc. may be mentioned. Among these, from the viewpoint that a stable carbene compound is obtained, N, O, P, and S are preferable, while N (nitrogen atom) is more preferable.

As the carbene compound which contains a hetero atom, one which has a structure comprised of a carbene carbon atom at the two sides of which hetero atoms adjoin and bond is preferable, furthermore one in which a hetero ring comprised of a carbene carbon atom and hetero atoms at the two sides is formed is more preferable. Further, one in which the hetero atoms which adjoin the carbine carbon atom are high bulk substituents is preferred.

As the carbene compound which contains a hetero atom, a compound which is expressed by the following general formula (2) or general formula (3) may be mentioned.

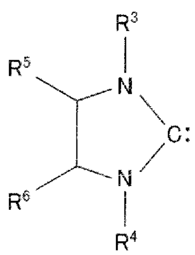

(2)

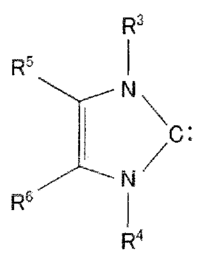

(3)

In the above general formulas (2) and (3), $R^3$ to $R^6$ respectively independently represent a hydrogen atom, halogen atom, or $C_1$ to $C_{20}$ hydrocarbon group which may contain a halogen atom, oxygen atom, nitrogen atom, sulfur atom, phosphorus atom, or silicon atom. Further, $R^3$ to $R^6$ may bond with each other in any combination to form a ring.

As specific examples of the compound expressed by the above general formulas (2) and (3), 1,3-dimesitylimadazolidin-2-ylidene, 1,3-di(1-adamantyl)imidazolidin-2-ylidene, 1-cyclohexyl-3-mesityl-imidazolidin-2-ylidene, 1,3-dimesityloctahydrobenzimidazol-2-ylidene, 1,3-diisopropyl-4-imidazolin-2-ylidene, 1,3-di(1-phenylethyl)-4-imidazolin-2-ylidene, 1,3-dimesityl-2,3-dihydrobenzimidazol-2-ylidene, etc. may be mentioned.

Further, in addition to the compounds which are shown in the above general formulas (2) and (3), 1,3,4-triphenyl-2,3,4,5-tetrahydro-1H-1,2,4-triazol-5-ylidene, 1,3-dicyclohexylhexahydropyrimidine-2-ylidene, N,N,N',N'-tetraisopropylformamidinylidene, 1,3,4-triphenyl-4,5-dihydro-1H-1,2,4-triazol-5-ylidene, 3-(2,6-diisopropylphenyl)-2,3-dihydrothiazol-2-ylidene, or other carbene compounds which contain a hetero atom may also be used.

Further, as the phosphines, for example, ones which are expressed by the following general formula (4) may be mentioned.

$$PR^7R^8R^9 \qquad (4)$$

In the above general formula (4), $R^7$, $R^8$, and $R^9$ respectively independently indicate an alkyl group, alkoxy group, cycloalkyl group, cycloalkyloxy group, phenyl group, phenyloxy group, benzyl group, benzyloxy group, etc. These may have substituents. Among these as well, an alkyl group, alkoxy group, cycloalkyl group, or cycloalkyloxy group is preferable, while an alkoxy group which enables formation of a composition which has a longer pot life and stabler polymerization activity is particularly preferable.

As the alkyl group, an $\alpha$-branched alkyl group which may have a substituent, that is, one which is expressed by $-CR^{10}R^{11}R^{12}$ (where $R^{10}$ is a hydrogen atom or $C_1$ to $C_{12}$ alkyl group, $R^{11}$ is a hydrogen atom or $C_1$ to $C_{12}$ alkyl group, $R^{12}$ is a hydrogen atom, $C_1$ to $C_{12}$ alkyl group, or phenyl group which may have a substituent comprised of a $C_1$ to $C_4$ alkoxy group, the total of the carbons in $-CR^{10}R^{11}R^{12}$ being 3 to 18 in range) is preferable. As specific examples of such an alkyl group, i-propyl, i-butyl, t-butyl, 1,1-dimethylpropyl, 1-ethyl-1-methylpropyl, 1,1-dimethylbutyl, 1,1-dimethylpentyl, 1,1-diethylbutyl, 3,7-dimethyloctyl, 1-methylbutyl, 1-methylpentyl, 1-methylhexyl, 1-ethylpropyl, 1-ethylbutyl, 1-propylheptyl, 1-cyclohexylethyl, 1-phenylethyl, etc. may be mentioned.

The alkoxy group is preferably a $C_3$ to $C_{12}$ one, more preferably a $C_3$ to $C_8$ one, furthermore preferably a $C_3$ to $C_6$ one. Further, as the alkoxy group, an $\alpha$-branched alkoxy group which may have a substituent, for example, one which is expressed by $-O-CR^{13}R^{14}R^{15}$ (where $R^{13}$ is a hydrogen atom or $C_1$ to $C_{12}$ alkyl group, $R^{14}$ is a hydrogen atom or a $C_1$ to $C_{12}$ alkyl group, $R^{15}$ is a hydrogen atom, $C_1$ to $C_{12}$ alkyl group, or phenyl group which may have a substituent comprised of a $C_1$ to $C_4$ alkoxy group, the total of the carbon atoms in $-O-CR^{13}R^{14}R^{15}$ being 3 to 18 in range) is preferable. As specific examples of such an alkoxy group, i-propyloxy, i-butyloxy, t-butyloxy, 1,1-dimethylpropyloxy, 1-ethyl-1-methylpropyloxy, 1,1-dimethylbutyloxy, 1,1-dimethylpentyloxy, 1,1-diethylbutyloxy, 3,7-dimethyloctyloxy, 1-methylbutyloxy, 1-methylpentyloxy, 1-methylhexyloxy, 1-ethylpropyloxy, 1-ethylbutyloxy, 1-ethylpentyloxy, 1-propylheptyloxy, 1-cyclohexylethyloxy, 1-phenylethyloxy, etc. may be mentioned.

As the cycloalkyl group, preferably a $C_5$ to $C_8$ one, more preferably a $C_5$ to $C_6$ one, may be mentioned. As specific examples of such a cycloalkyl group, a cyclobutyl group, cyclohexyl group, cycloheptyl group, cyclooctyl group, etc. may be mentioned. Further, these may be substituted by a $C_1$ to $C_3$ alkyl group, halogenoalkyl group, or alkoxy group.

As the cycloalkyloxy group, preferably a $C_5$ to $C_8$ one, more preferably a $C_5$ to $C_6$ one, may be mentioned. As specific examples of such a cycloalkyloxy group, a cyclobutyloxy group, cyclohexyloxy group, cycloheptyloxy group, cyclooctyloxy group, etc. may be mentioned. Further, these may be substituted by a $C_1$ to $C_3$ alkyl group, halogenoalkyl group, or alkoxy group.

Note that, in the above general formula (4), $R^7$, $R^8$, and $R^9$ may be different from each other or may be the same, but from the viewpoint of the ease of acquisition, these $R^7$, $R^8$, and $R^9$ are preferably all the same substituents.

The ruthenium carbene complex which is used in the present invention is a cis form where $L^1$ and $L^2$ are positioned at the cis positions with each other, but so long as in the range where expression of the advantageous effects of the present invention is not impaired, a trans form where $L^1$ and $L^2$ are positioned at the trans positions with each other may also be partially included.

The ruthenium carbene complex which is used in the present invention preferably has a molar ratio of the cis forms (cis ratio) of 90% or more, more preferably 95% or more, furthermore preferably 97% or more. If the cis ratio is too low, sometimes the effect of improvement of the pot life and the effect of improvement of the stability of the polymerization activity become difficult to obtain. Note that the cis ratio can, for example, be adjusted by the reaction temperature or time with the compound of the formula (4) when synthesizing the ruthenium carbene complex or by dissolving the ruthenium carbene complex in various types of solvents and heating at a predetermined temperature and time. The cis ratio can, for example, be measured by the method of using $^1H$-NMR to quantify the integrated values of the proton peaks of the isomers and comparing them. Note that the cis ratio is in the relationship of cis ratio (%)=100(%)-trans ratio (%)" with respect to the molar ratio of the trans form (trans ratio).

The polymerizable composition of the present invention may include a metathesis polymerization catalyst [including the above ruthenium carbene complex (trans form)] other than the ruthenium carbene complex (cis form), but

the content of the ruthenium carbene complex in the entire metathesis polymerization catalyst which is contained in the polymerizable composition is usually 90% or more, preferably 95% or more, more preferably 97% or more. If the content of the ruthenium carbene complex is too low, sometimes the effect of improvement of the pot life and the effect of improvement of the stability of the polymerization activity become difficult to obtain.

Further, by making the $L^2$ a group with higher bulk three-dimensionally than $L^1$, the polymerization catalyst (ruthenium carbene complex) is improved in stability.

The method of production of the ruthenium carbene complex of the present invention is not particularly limited. For example, it may be produced with reference to the method described in Japanese Patent Publication No. 11-510807A, Japanese Patent Publication No. 2002-524250A, or Japanese Patent Publication No. 2009-504401A.

The amount of the ruthenium carbene complex used is a molar ratio of the (ruthenium atoms in the catalyst: cycloolefin monomer) of usually 1:2,000 to 1:2,000,000, preferably 1:5,000 to 1:1,000,000, more preferably 1:10,000 to 1:500,000 in range.

The ruthenium carbene complex, if desired, can be used dissolved or suspended in a stall amount of an inert solvent. As such a solvent, n-pentane, n-hexane, n-heptane, liquid paraffin, mineral spirits, or other chain aliphatic hydrocarbons; cyclopentane, cyclohexane, methylcyclohexane, dimethylcyclohexane, trimethylcyclohexane, ethylcyclohexane, diethylcyclohexane, decahydronaphthalene, dicycloheptane, tricyclodecane, hexahydroindene, cyclooctane, and other alicyclic hydrocarbons; benzene, toluene, xylene, and other aromatic hydrocarbons; nitromethane, nitrobenzene, acetonitrile, and other nitrogen-containing hydrocarbons; diethylether, tetrahydrofuran, and other oxygen-containing hydrocarbons; etc. may be mentioned. Among these, use of the industrially generally used aromatic hydrocarbons or aliphatic hydrocarbons and alicyclic hydrocarbons is preferable. Further, if not causing a drop in the activity of the metathesis polymerization catalyst, a liquid antiaging agent, liquid plasticizer, or liquid elastomer as a solvent may also be used.

The ruthenium carbene complex may be used together with the later explained polymerization adjusting agent for the purpose of controlling the polymerization activity and improving the polymerization reaction rate.

(Cross-Linking Agent)

The polymerizable composition of the present invention may also contain a cross-linking agent in addition to the above cycloolefin monomer and ruthenium carbene complex. By including a cross-linking agent, the polymer which is obtained by bulk polymerizing the polymerizable composition of the present invention may be made a post-cross-linkable thermoplastic resin efficiently. Here, "post-cross-linkable" means when heating the resin, a cross-linking reaction proceeds and a cross-linked resin can be obtained. If heating the cross-linkable resin shaped article of the present invention having this polymer as the base resin, the base resin (cycloolefin polymer) will melt, but it will be a high viscosity, so the shape will be retained. When brought into contact with any member, at the surface of the shaped article, the resin will exhibit moldability to the shape of that member then will finally become cross-linked and harden.

As the cross-linking agent, usually a radical generating agent is preferably used. As the radical generating agent, an organic peroxide, diazo compound, nonpolar radical generating agent, etc. may be mentioned.

As the organic peroxide, for example, t-butylhydroperoxide, p-mentanehydroperoxide, cumenhydroperoxide, and other hydroperoxides; dicumylperoxide, t-butylcumylperoxide, α,α'-bis(t-butylperoxy-m-isopropyl)benzene, di-t-butylperoxide, 2,5-dimethyl-2,5-di(t-butylperoxy)-3-hexine, 2,5-dimethyl-2,5-di(t-butylperoxy)hexane, and other dialkyl peroxides; dipropionyl peroxide, benzoyl peroxide, and other diacyl peroxides; 2,2-di(t-butylperoxy)butane, 1,1-di(t-hexylperoxy)cyclohexane, 1,1-di(t-butylperoxy)-2-methylcyclohexane, 1,1-di(t-butylperoxy)cyclohexane, and other peroxyketals; t-butylperoxyacetate, t-butylperoxybenzoate, and other peroxy esters; t-butylperoxyisopropylcarbonate, di (isopropylperoxy)dicarbonate, and other peroxycarbonates; t-butyltrimethylsilylperoxide and other alkylsilylperoxides; etc. may be mentioned. Among these as well, from the viewpoint of less impairment of the metathesis polymerization reaction, dialkyl peroxides and peroxyketals are preferable.

As the diazo compound, for example, 4,4'-bisazidobenzal(4-methyl)cyclohexanone, 4,4'-diazidochalcone, 2,6-bis(4'-azidobenzal)cyclohexanone, 2,6-bis(4'-azidobenzal)-4-methylcyclohexanone, 4,4'-diazidodiphenylsulfone, 4,4'-diazidodiphenylmethane, 2,2'-diazidostilbene, etc. may be mentioned.

As the nonpolar radical generating agent, 2,3-dimethyl-2,3-diphenylbutane, 2,3-diphenylbutane, 1,4-diphenylbutane, 3,4-dimethyl-3,4-diphenylhexane, 1,1,2,2-tetraphenylethane, 2,2,3,3-tetraphenylbutane, 3,3,4,4-tetraphenylhexane, 1,1,2-triphenylpropane, 1,1,2-triphenylethane, triphenylmethane, 1,1,1-triphenylethane, 1,1,1-triphenylpropane, 1,1,1-triphenylbutane, 1,1,1-triphenylpentane, 1,1,1-triphenyl-2-propene, 1,1,1-triphenyl-4-pentene, 1,1,1-triphenyl-2-phenylethane, etc. may be mentioned.

These radical generating agents may be used as single type alone or as two or more types combined. By using two or more types of radical generating agents together and adjusting their volume ratios, it is possible to freely control the glass transition temperature or molten state of the obtained resin shaped article. The one-minute half life temperature of the radical generating agent is not particularly limited, but is usually 150 to 300°C, preferably 180 to 250°C, in range.

Here, the "one-minute half life temperature" is the temperature at which half of the radical generating agent breaks down in one minute. The one-minute half life temperature of the radical generating agent may be found, for example, by referring to the catalog or homepage of the individual radical generating agent manufacturers (for example, NOF Corporation).

The amount of the cross-linking agent is usually 0.1 to 10 parts by weight with respect to 100 parts by weight of the cycloolefin monomer, preferably 0.5 to 5 parts by weight. If the amount of the cross-linking agent is in that range, the obtained cross-linked resin shaped article will have a sufficient cross-linked density and a laminate which has the desired physical properties will be efficiently obtained, so this is preferable.

(Other Compounding Agents)

The polymerizable composition of the present invention may have added to it, in addition to the above cycloolefin monomer, metathesis polymerization catalyst, and radical generating agent, as desired, a filler, polymerization adjusting agent, polymerization reaction retardant, chain transfer agent, cross-linking aid, flame retardant, antioxidant, coloring matter, and other compounding agents.

The filler is not particularly limited so long as one which is generally used industrially. Either an inorganic filler or an organic filler may be used, but preferably it is an inorganic filler. By blending a filler into the polymerizable composition of the present invention, it is possible to better improve the mechanical strength and heat resistance of the obtained resin shaped article and laminate.

As the inorganic filler, for example, iron, copper, nickel, gold, silver, aluminum, lead, tungsten, and other metal particles; carbon black, graphite, activated carbon, carbon balloons, and other carbon particles; silica, silica balloons, alumina, titanium oxide, iron oxide, zinc oxide, magnesium oxide, tin oxide, beryllium oxide, barium ferrite, strontium ferrite, or other inorganic oxide particles; calcium carbonate, magnesium carbonate, sodium hydrogencarbonate, or other inorganic carbonate particles; calcium sulfate and other inorganic sulfate particles; talc, clay, mica, kaolin, fly ash, montmorillonite, calcium silicate, glass, glass balloons, and other inorganic silicate particles; calcium titanate, lead zirconate titanate, and other titanate particles; aluminum nitride, silicon carbide particles and whiskers, etc. may be mentioned. As the organic filler, for example, sawdust, starch, organic pigment, polystyrene, nylon, polyethylene, polypropylene, or other such polyolefin, vinyl chloride, plastic waste, and other compound particles may be mentioned. These fillers may be respectively used alone or as two or more types combined.

The amount of the filler is usually 1 to 1000 parts by weight with respect to 100 parts by weight of the cycloolefin monomer, preferably 10 to 500 parts by weight, more preferably 50 to 300 parts by weight in range.

The polymerization adjusting agent is blended in for the purpose of controlling the polymerization activity or improving the polymerization reaction rate, but one which acts as an activating agent (co-catalyst) is preferable. As the activating agent, an alkylate, halogenate, alkoxylate, aryloxalate, etc. of aluminium, scandium, or tin may be used. As specific examples of these, trialkoxyaluminum, triphenoxyaluminum, dialkoxyalkylaluminum, alkoxydialkylaluminum, trialkylaluminum, dialkoxyaluminum chloride, alkoxyalkylaluminum chloride, dialkylaluminum chloride, trialkoxyscandium, tetraalkoxytitanium, tetraalkoxytin, tetraalkoxyzirconium, etc. may be mentioned.

These polymerization adjusting agents may be used respectively alone or in two or more types combined. The amount of use of the polymerization adjusting agent is a molar ratio of the (metal atoms in the metathesis polymerization catalyst:polymerization adjusting agent) of usually 1:0.05 to 1:100, preferably 1:0.2 to 1:20, more preferably 1:0.5 to 1:10 in range.

Note that the above "metal atoms in the metathesis polymerization catalyst" are preferably ruthenium atoms in the above ruthenium carbene complex.

The polymerization reaction retardant functions to suppress the increase in viscosity of the polymerizable composition. As the polymerization reaction retardant, triphenylphosphine, tributylphosphine, trimethylphosphine, triethylphosphine, dicyclohexylphosphine, vinyldiphenylphosphine, allyldiphenylphosphine, triallylphosphine, styryldiphenylphosphine, and other phosphine compounds; aniline, pyridine, and other Lexis bases; etc. may be used.

The polymerizable composition of the present invention preferably has a chain transfer agent blended into it.

When blending a chain transfer agent into the polymerizable composition of the present invention, at the surface of the cross-linkable resin shaped article which is obtained by bulk polymerization of the composition, the moldability of the resin when heated to melt can be improved more. For this reason, in a laminate which is obtained by laminating the cross-linkable resin shaped article and heating them to melt and cross-link, the adhesion between the layers rises much more and the peel strength is improved more, so this preferable.

The chain transfer agent is a compound which has at least one group which contains an aliphatic carbon-carbon double bond (below, called an "aliphatic carbon-carbon double bond group").

As this aliphatic carbon-carbon double bond group, a vinyl group and/or a vinylidene group is preferable.

As specific examples of the chain transfer agent, 1-hexene, 2-hexene, styrene, vinylcyclohexane, allylamine, glycidyl acrylate, allylglycidyl ether, ethylvinyl ether, methylvinyl ketone, 2-(diethylamino)ethyl acrylate, and 4-vinylaniline,

and other chain transfer agents which have a single aliphatic carbon-carbon double bond group; divinylbenzene, vinyl methacrylate, hexenyl methacrylate, allyl methacrylate, styryl methacrylate, allyl acrylate, undecenyl methacrylate, styryl acrylate, ethyleneglycol diacrylate, and other chain transfer agents which have two aliphatic carbon-carbon double bond groups; allyltrivinylsilane, allylmethyldivinylsilane, and other chain transfer agents which have three or more aliphatic carbon-carbon double bond groups, etc. may be mentioned. From the viewpoint of improving the strength of the obtained cross-linked resin shaped article and laminate, one which has two or more aliphatic carbon-carbon double bond groups is preferable, while one which has two aliphatic carbon-carbon double bond groups is more preferable. Among these chain transfer agents, a chain transfer agent which has one vinyl group and methacryl group each is preferable, while vinyl methacrylate, hexenyl methacrylate, allyl methacrylate, styryl methacrylate, undecenyl methacrylate, etc. are particularly preferable.

These chain transfer agents may be used respectively alone or as two or more types combined. The amount of the chain transfer agent used is usually 0.01 to 10 parts by weight with respect to 100 parts by weight of the cycloolefin monomer, preferably 0.1 to 5 parts by weight.

The cross-linking aid which is used in the present invention is a compound which has two or more cross-linkable carbon-carbon unsaturated bonds which do not participate in the ring-opening polymerization, but can participate in the cross-linking reaction which is induced by the radical generating agent and do not correspond to the above chain transfer agent. Such cross-linkable carbon-carbon unsaturated bonds are for example present as end vinylidene groups in the compound forming the cross-linking aid, in particular, preferably as isopropenyl groups or methacryl groups, particularly preferably as methacryl groups.

As specific examples of the cross-linking aid, p-diisopropenylbenzene, m-diisopropenylbenzene, o-diisopropenylbenzene, and other polyfunctional compounds which have two or more isopropenyl groups; ethylenedimethacrylate, 1,3-butylenedimethacrylate, 1,4-butylenedimethacrylate, 1,6-hexanedioldimethacrylate, polyethyleneglycoldimethacrylate, polyethyleneglycoldimethacrylate, ethyleneglycoldimethacrylate, triethyleneglycoldimethacrylate, diethyleneglycoldimethacrylate, 2,2'-bis(4-methacryloxydiethoxyphenyl) propane, trimethylolpropanetrimethacrylate, pentaerythritoltrimethacrylate, and other polyfunctional compounds which have two or more methacryl groups etc. may be mentioned. Among these, as cross-linking aids, from the viewpoint of improving the heat resistance and the crack resistance of the obtained laminate, a polyfunctional compound which has two or more methacryl groups is preferable. Among the polyfunctional compounds which have two or more methacryl groups, in particular, trimethylolpropanetrimethacrylate, pentaerythritoltrimethacrylate, or other polyfunctional compounds which have three methacryl groups are more preferable.

The cross-linked aids may be used respectively alone or as two or more types combined. The amount of the cross-linking aid blended into the polymerizable composition of the present invention is usually 0.1 to 100 parts by weight with respect to 100 parts by weight of the cycloolefin monomer, preferably 0.5 to 50 parts by weight, more preferably 1 to 30 parts by weight.

The flame retardant is not particularly limited. It is possible to suitably select and use one from known flame retardants, for example, a halogen-based flame retardant, phosphorus-nitrogen-based flame retardant, a phosphorus ester flame retardant, nitrogen-based flame retardant, and inorganic flame retardant. The amount used may also be suitably adjusted to give the desired effect.

The polymerizable composition may have added to it an antioxidant comprised of at least one type of antioxidant which is selected from the group comprising a phenol-based antioxidant, amine-based antioxidant, phosphorus-based antioxidant, and sulfur-based antioxidant so as to thereby enable the heat resistance of the obtained laminate to be improved to a high degree without impairing the cross-linking reaction. Among these, a phenol-based antioxidant and amine-based antioxidant are preferable, while a phenol-based antioxidant is particularly preferable. These antioxidants may be used respectively alone or as two or more types combined. The amount of the antioxidant blended in is suitably selected in accordance with the purpose of use, but is usually 0.0001 to 10 parts by weight with respect to 100 parts by weight of the cycloolefin monomer, preferably 0.001 to 5 parts by weight, more preferably 0.01 to 1 part by weight in range.

The polymerizable composition of the present invention can be obtained by mixing the above ingredients. As the method of mixing, an ordinary method may be followed. For example, it may be prepared by adding a solution of a metathesis polymerization catalyst comprised of a ruthenium carbene complex dissolved or dispersed in a suitable solvent (catalyst solution) to a solution containing a cycloolefin monomer and other compounding agents added as desired (monomer solution) and stirring them.

The polymerizable composition of the present invention contains a cycloolefin monomer and a ruthenium carbene complex which is shown by the above general formula (1), so has a long pot life and a stable polymerization activity. In particular, such a polymerizable composition of the present invention has a rate of rise of viscosity after storage at a temperature of 25°C for 24 hours which is calculated by the following formula:

$$\text{Rate of rise of viscosity (\%)} = [(\text{viscosity of polymerizable composition after storage at a temperature of } 25^\circ\text{C for 24 hours}) - (\text{viscosity of polymerizable composition right after preparation})] \div (\text{viscosity of polymerizable composition right after preparation}) \times 100$$

which preferably is suppressed to 50% or less, more preferably is suppressed to 30% or less, furhtermore preferably is suppressed to 20% or less. For this reason, according to the polymerizable composition of the present invention, since the rise in viscosity after storage is suppressed in this way, it is possible to provide a cross-linkable resin shaped article, cross-linked resin shaped article, and laminate which have the desired characteristics regardless of the storage time. Note that the storage temperature of the polymerizable composition is not particularly limited, but usually is -273°C or more and 50°C or less, more preferably -100°C or more and 30°C or less.

(Cross-Linkable Resin Shaped Article)

The cross-linkable resin shaped article of the present invention is obtained by bulk polymerization of the above-mentioned polymerizable composition of the present invention. As the method of bulk polymerization of a polymerizable composition to obtain a cross-linkable resin shaped article, for example, (a) the method of coating the polymerizable composition on a support member and then bulk polymerizing it, (b) the method of injecting the polymerizable composition into a mold and then bulk polymerizing it, (c) the method of impregnating the polymerizable composition in a fiber reinforcing material and then bulk polymerizing it, etc. may be mentioned.

The polymerizable composition of the present invention is low in viscosity, so the coating in the method of (a) can be smoothly performed, with the injection in the method of (b), the polymerizable composition can be made to reach even spaces of complicated shapes rapidly without causing entrainment of bubbles, and, in the method of (c), the polymerizable composition can be impregnated in the fiber reinforcing material rapidly and evenly.

According to the method of (a), a film-shaped or sheet-shaped cross-linkable resin shaped article is obtained. The thickness of the shaped article is usually 15 mm or less, preferably 5 mm or less, more preferably 0.5 mm or less, most preferably 0.1 mm or less. As the support member, for example, a film or sheet comprised of polyethylene terephthalate, polypropylene, polyethylene, polycarbonate, polyethylene naphthalate, polyacrylate, nylon, or other resin; a film or sheet comprised of iron, stainless steel, copper, aluminum, nickel, chromium, gold, silver, and other metal materials; etc. may be mentioned. Among these as well, use of a metal foil or resin film is preferable. The thickness of the metal foil or resin film, from the viewpoint of the work efficiency etc., is usually 1 to 150 μm, preferably 2 to 100 μm, more preferably 3 to 75 μm. As the metal foil, one which has a smooth surface is preferable. The surface roughness (Rz) is, by value measured by an AFM (atomic force microscope), usually 10 μm or less, preferably 5 μm or less, more preferably 3 μm or less, furthermore preferably 2 μm or less. Further, the surface of the metal foil is preferably treated by a known coupling agent, binder, etc. According to the method of (a), for example, when using a support member comprised of copper foil, it is possible to obtain resin coated copper (RCC).

As the method of coating a support member with the polymerizable composition of the present invention, spray coating, dip coating, roll coating, curtain coating, die coating, slit coating, or other known coating method may be mentioned.

The polymerizable composition which is coated on the support member is dried as desired and then bulk polymerized. The bulk polymerization is performed by heating the polymerizable composition to a predetermined temperature. The method of heating the polymerizable composition is not particularly limited. The method of placing the support member on which the polymerizable composition is coated on a hot plate to heat the composition, the method of using a press machine to press and heat (hot press) the composition, the method of pressing the composition by heated rollers, the method of heating in a heating furnace, etc. may be mentioned.

According to the method of (b), it is possible to obtain any shape of cross-linkable resin shaped article. As the shape, a sheet shape, film shape, column shape, round cylinder shape, multangular cylinder shape, etc. may be mentioned.

As the mold which is used here, a conventional known mold, for example, a split mold structure, that is, a mold which has a core mold and a cavity mold, may be used. The cavity of these is filled with the polymerizable composition to cause bulk polymerization. The core mold and the cavity mold are prepared so as to form a cavity which matches the shape of the targeted article. The mold is not particularly limited in shape, material, size, etc. Furthermore, by preparing glass sheets, metal sheets, or other sheet shaped molds and predetermined thicknesses of spacers, sandwiching the spacers between the two sheet-shaped molds, filling the formed space with the polymerizable composition, and bulk polymerizing it, it is possible to obtain a sheet shaped or film shaped cross-linkable resin shaped article.

The charging pressure (injection pressure) when charging the polymerizable composition into the cavity of the mold is usually 0.01 to 10 MPa, preferably 0.02 to 5 MPa. If the charging pressure is too low, the transfer surface which is formed at the inner circumference of the cavity tends to not be transferred well, while if the charging pressure is too high, the mold has to be made higher in rigidity, so the result is not economical. The mold clamping pressure is usually 0.01 to 10 MPa in range. As the method of heating the polymerizable composition, the method of utilizing an electric heater which is embedded in the mold or steam or other heating methods, the method of heating the mold in an electric furnace, etc. may be mentioned.

The method of (c) is suitably used for obtain a sheet shaped or film shaped cross-linkable resin shaped article. For example, the polymerizable composition may be impregnated into the fiber reinforcing material by coating a predetermined amount of the polymerizable composition on the fiber reinforcing material by spray coating, dip coating, roll coating, curtain coating, die coating, slit coating, or other known method, laying a protective film over the surface if desired, and using a roll etc. to press the assembly from the top side. After the polymerizable composition is impregnated into the fiber reinforcing material, the impregnated article is heated to a predetermined temperature to cause the polymerizable composition to bulk polymerize and obtain the desired cross-linkable resin shaped article.

As the fiber reinforcing material, an inorganic and/or organic fiber may be used. For example, glass fiber, metal fiber, ceramic filber, carbon fiber, aramide fiber, polyethylene terephthalate fiber, vinylon fiber, polyester fiber, amide fiber, polyacrylate or other liquid crystal fiber or other known fiber may be mentioned. These may be used as single type alone or as two or more types combined. The shape of the fiber reinforcing material is not particularly limited. For example, a mat, cloth, unwoven fabric, etc. may be mentioned.

As the heating method of the impregnated product comprised of the fiber reinforcing material which has been impregnated by the polymerizable composition, for example, the method of placing the impregnated article on a support member and heating it like in the method of the above (a), the method of setting the fiber reinforcing material in the mold in advance, impregnating it with the polymerizable composition in the mold to obtain an impregnated article, then heating it like in the method of the above (b), etc. may be mentioned.

The thickness of the cross-linkable resin shaped article which is obtained by the method of (c) is not particularly limited, but is usually 1 μm to 10 mm. Further, the content of the fiber reinforcing material in the shaped article may be suitably selected in accordance with the purpose of use, but is usually 5 to 50 vol%, preferably 15 to 40 vol% in range. If the content of the fiber reinforcing material is in this range, the mechanical strength and dielectric characteristics are balanced well in the obtained laminate, so this is preferred.

In the method of each of the above (a), (b), and (c) as well, the heating temperature for causing the polymerizable composition to polymerize is usually over 50°C, preferably over 50°C and 250°C or less, more preferably 70 to 200°C, furthermore preferably 80 to 150°C in range and is usually the one-minute half life temperature of the cross-linking agent or less, preferably the one-minute half life minus 10°C or more, more preferably the one-minute half life temperature minus 20°C or less. Further, the polymerization time may be suitably selected, but is usually 1 second to 20 minutes, preferably 10 seconds to 5 minutes. Further, the polymerization conversion rate is preferably 90% or more, more preferably 95% or more, furthermore preferably 99% or more. By heating the polymerizable composition under these conditions, a cross-linkable resin shaped article with little unreacted monomers is obtained, so this is preferable. If the polymerization temperature is too low, the obtained cross-linkable resin shaped article is liable to fall in mechanical strength. Similarly, even if the polymerization conversion rate is too low, the obtained cross-linkable resin shaped article is liable to fall in mechanical strength. Note that the polymerization conversion rate can be quantified by for example using gas chromatography.

The polymer which forms the cross-linkable resin shaped article which is obtained in this way (cycloolefin (polymer) substantially does not have a cross-linked structure and, for example, can dissolve in toluene. The molecular weight of the polymer is the weight average molecular weight converted to polystyrene which is measured by gel permeation chromatography (eluent: toluene) and is usually 1,000 to 1,000,000, preferably 5,000 to 500,000, more preferably 10,000 to 100,000 in range.

The cross-linkable resin shaped article of the present invention may be one where part of the component resins is cross-linked. For example, when polymerizing the polymerizable composition in the mold by bulk polymerization, the center part in the mold is hard for the heat of the polymerization reaction to diffuse to, so sometimes the temperature in part of the mold becomes too high. At the high temperature part, sometimes a cross-linking reaction occurs whereby cross-linking takes place. However, so long as the surface part where heat easily dissipates is formed by a cross-linkable resin which is post-cross-linkable, the cross-linkable resin shaped article of the present invention can exhibited the desired advantageous effects.

The cross-linkable resin shaped article of the present invention is one obtained by completing the bulk polymerization. There is no liability of the polymerization reaction further proceeding during storage. Further, the cross-linkable resin shaped article of the present invention contains a radical generating agent, but so long as not heating to a temperature which causes a cross-linking reaction, the surface hardness will not change or other problems arise and the storage stability will be excellent.

The cross-linkable resin shaped article of the present invention is for example suitably used as a prepreg for production of the cross-linked resin shaped article and laminate of the present invention.

(Cross-Linked Resin Shaped Article)

The cross-linked resin shaped article of the present invention is obtained by bulk polymerizing and cross-linking the polymerizable composition of the present invention. The cross-linked resin shaped article is, for example, obtained by cross-linking the cross-linkable resin shaped article of the present invention. The cross-linkable resin shaped article may be cross-linked by holding the shaped article at a temperature where a cross-linking reaction occurs in the base resin or more. The heating temperature is usually at least the temperature at which the radical generating agent causes a cross-linking reaction. Specifically, it is the one-minute half life temperature of the radical generating agent or more, preferably the one-minute half life temperature plus 5°C or more, more preferably the one-minute half life temperature plus 10°C or more. Typically, it is 100 to 300°C, preferably 150 to 250°C in range. The heating time is 0.1 to 180 minutes, preferably 0.5 to 120 minutes, more preferably 1 to 60 minutes in range. Further, by maintaining the polymerizable composition of the present invention at the temperature at which the cross-linkable resin shaped article cross-links or more, specifically, by heating for the temperature and time described here, the bulk polymerization of the cycloolefin monomer and cross-linking reaction at the cycloolefin polymer caused by this polymerization proceed together thereby enabling the production of the cross-linked resin shaped article of the present invention. When producing the cross-linked resin shaped article in this way, if following the method of the above (a), for example, if using a support member comprised of copper foil, a copper clad laminate (CCL) can be obtained.

(Laminate)

The laminate of the present invention has at least a layer comprised of the above-mentioned cross-linkable resin shaped article of the present invention or the above-mentioned cross-linked resin shaped article of the present invention. The two shaped articles may be continuously laminated or indirectly laminated with other layers between them.

As a laminate which is comprised of the cross-linkable resin shaped article of the present invention laminated together, for example, the RCC obtained by the method of the above (a) and comprised of copper foil and the cross-linkable resin shaped article joined together in layers may be mentioned. Further, as a laminate which is comprised of the cross-linked resin shaped article of the present invention laminated together, for example, the CCL obtained by the method of the above (a) and comprised of copper foil and the cross-linked resin shaped article joined together in layers may be mentioned. In the method of the above (a), if using as the support member a separately obtained cross-linked resin shaped article, it is possible to obtain a laminate of the cross-linkable resin shaped article and the cross-linked resin shaped article.

Further, the sheet shaped or film shaped cross-linkable resin shaped article and if desired the sheet shaped or film shaped cross-linked resin shaped article may be freely laminated or further, for example, the above metal foil may be laminated and the result hot pressed for cross-linking to thereby obtain the laminate of the present invention which is comprised of the cross-linked resin shaped article laminated together. At this time, the RCC or CCL or other laminate may also be laminated. The pressure at the time of hot pressing is usually 0.5 to 20 MPa, preferably 3 to 10 MPa. The hot pressing may be performed in a vacuum or in a reduced pressure atmosphere. The hot pressing may be performed using a known press machine which has a press mold for forming a flat plate or a press for a sheet mold compound (SMC) or bulk mold compound (BMC) etc.

The laminate of the present invention has a layer which is comprised of the cross-linkable resin shaped article or the cross-linked resin shaped article of the present invention. The cross-linkable resin shaped article and cross-linked resin shaped article of the present invention are obtained by using the above-mentioned polymerizable composition of the present invention. The polymerizable composition of the present invention has a long pot life and stable polymerization activity, so the laminate of the present invention is excellent in stability of electrical characteristics, mechanical characteristics, and various other characteristics (has little variation in products). Further, the laminate of the present invention is provided with a low coefficient of linear thermal expansion, high mechanical strength, low dielectric tangent, and other characteristics which cycloolefin-based resins inherently have. Therefore, it can be suitably used for the production of high dielectric multilayer circuit boards etc.

## EXAMPLES

Below, examples and comparative examples were given to explain the present invention in more detail. Note that, in the examples, the "parts" and "%" are based on weight unless otherwise indicated. The various types of physical properties were evaluated in accordance with the following methods.

(1) Viscosity

The viscosity of the polymerizable composition was measured using a type E viscosity meter at 25°C and 25 rpm in conditions. Note that, in the examples, the viscosity right after the polymerizable composition was prepared (initial viscosity) and the viscosity after storage for 24 hours at 25°C in conditions (viscosity after 24 hours), that is, two types of viscosity (units: cP), were measured.

(2) Molecular Weight (Mw) and Molecular Weight Distribution (Mw/Mn)

The molecular weight (Mw) and molecular weight distribution (Mw/Mn) of the cross-linkable resin were measured converted to polystyrene by gel permeation chromatography using toluene as an eluent.

(3) Polymer Conversion Rate

The polymer conversion rate of the cross-linkable resin was calculated to measure the residual amount of monomers by using gas chromatography.

Example 1

A ruthenium carbene complex expressed by the following formula (5) (tri(i-propoxy)phosphine(3-phenyl-1H-inden-1-ylidene)[1,3-bis(2,4,6-trimethylphenyl)-4,5-dihydroimidazol-2-ylidene]ruthenium (II) dichloride, made by STREM) 1 part was dissolved in tetrahydrofuran 40 parts to prepare a catalyst solution. Separate from this, to a cycloolefin monomer comprised of tetracyclododecene (TCD) 10 parts and dicyclopentadiene 90 parts, a filler comprisd of fumed silica (product name "R715", made by Nippon Aerosil) 2.5 parts, a chain transfer agent comprised of undecenyl methacrylate 3 parts, a cross-linking agent comprised of di-t-butylperoxide (made by Kayaku Akzo, product name Kayabutyl D, one-minute half life temperature 192°C) 3 parts, and a cross-linking aid comprised of trimethylolpropane trimethacrylate 10 parts were mixed to prepare a monomer solution. Further, to the obtained monomer solution, the above prepared catalyst solution was added and stirred at a ratio of 0.3 ml per 100 g of cycloolefin monomer to prepare a polymerizable composition. Note that in the ruthenium carbene complex which is expressed by the following formula (5), the ratio of the cis forms where the neutral electron donor ligand comprised of "1,3-bis(2,4,6-trimethylphenyl)-4,5-dihydroimidazol-2-ylidene (also called '1,3-dimesitylimidazolidin-2-ylidene')" and the "triisopropyl phosphate [$P(OiPr)_3$]" are at the cis positions with each other (cis ratio), measured from the integrated ratio of the proton peaks of the different isomers by $^1$H-NMR, was 99% or more.

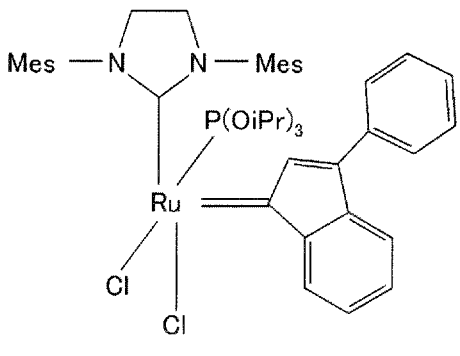

(5)

(where in the above formula (5), "iPr" indicates an isopropyl group, while further "Mes" indicates a mesityl(2,4,6-trimethylphenyl) group.)

Next, the obtained polymerizable composition 100 parts was cast over a polyethylene naphthalate film (Type Q51, thickness 75 μm, made by Teijin Dupont Film). Over this, a carbon fiber flat weave cloth (Pyrofil Woven Fabric (TR3110M), treated by a sizing agent (epoxy resin); made by Mitsubishi Rayohn) was laid. Over this, the polymerizable composition 80 parts was cast. This was covered from the top by a polyethylene naphthalate film, then a roller was used to make the polymerizable composition penetrate into the flat weave cloth as a whole. Furthermore, this was allowed to stand for 3 minutes in a heating furnace which was heated to 130°C to make the polymerizable composition bulk polymerize and obtain a thickness 0.25 mm cross-linkable resin shaped article (prepreg).

This prepreg was cut out to a size of 100 mm square, then the polyethylene naphthalate film was peeled off. Eight of these were stacked and hot pressed by a hot press at 3 MPa and 200°C for 15 minutes to obtain a laminate comprised of the cross-linked resin shaped article stacked up.

Further, separate from this, the polymerizable composition explained above was stored for 24 hours at 25°C. The polymerizable composition after storage for 24 hours was subjected to a polymerization reaction at 130°C for 3 minutes to obtain a cross-linkable resin shaped article (prepreg) (polymer after 24 hours). This prepreg was cut out to a size of 100 mm square, then the polyethylene naphthalate film was peeled off. Eight of these were stacked and hot pressed by a hot press at 3 MPa and 200°C for 15 minutes to obtain a laminate comprised of the cross-linked resin shaped article stacked up.

Further, using the polymerizable composition which was obtained as explained above to evaluate the viscosity (initial viscosity and viscosity after 24 hours) and using the cross-linkable resin which was obtained as explained above (initial polymer and polymer after 24 hours), the molecular weight (Mw), molecular weight distribution (Mw/Mn), and polymer conversion rate were evaluated. The results are shown in Table 1.

Example 2

Except for using the polymerizable composition which was obtained in Example 1 and changing the conditions at the time of the polymerization reaction to 110°C and 3 minutes, the same procedure was followed as in Example 1 to obtain a cross-linkable resin (initial polymer and polymer after 24 hours) and similarly evaluate it. The results are shown in Table 1.

Example 3

Except for using the polymerizable composition which was obtained in Example 1 and changing the conditions at the time of the polymerization reaction to 95°C and 3 minutes, the same procedure was followed as in Example 1 to obtain a cross-linkable resin (initial polymer and polymer after 24 hours) and similarly evaluate it. The results are shown in Table 1.

Comparative Example 1

A ruthenium carbene complex expressed by the following formula (6) (product name "Umicore $M3_1$", made by Umicore) 0.37 part and a polymerization retardant comprised of vinyl diphenyl phosphine 0.1 part were dissolved in toluene 9.53 parts to prepare a catalyst solution. Note that, in the ruthenium carbene complex which is expressed by the following formula (6), the ratio of the cis forms where the neutral electron donor ligand comprised of "1,3-bis(2,4,6-trimethylphenyl)-4,5-dihydroimidazol-2-ylidene (also called '1,3-dimesitylimidazolidin-2-ylidene')" and the "tricyclohexylphospine" are at cis positions with each other (cis ratio), measured from the integrated ratio of the proton peaks of the different isomers by $^1$H-NMR, was less than 1%.

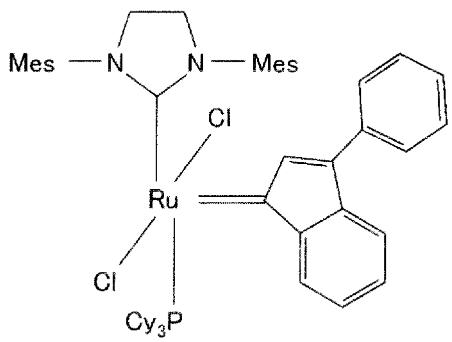

(6)

(where in the above formula (6), "Cy" indicates a cyclohexyl group, while "Mes" indicates a mesityl group)

Further, except for using the catalyst solution which was obtained in the above way, the same procedure was followed as in Example 1 to obtain a polymerizable composition and cross-linkable resin (initial polymer) and similarly evaluate it. The results are shown in Table 1. Note that, in Comparative Example 1, after storage for 24 hours, the polymerization reaction proceeded, a hard shaped article ended up being formed, measurement of the viscosity after storage for 24 hours was not possible, and, furthermore, a cross-linkable resin for performing various measurements (polymer after 24 hours) could not be obtained.

Comparative Example 2

Except for changing the amount of use of the polymerization retardant comprised of vinyldiphenylphosphine

when preparing a catalyst solution from 0.1 part to 0.5 part, the same procedure was followed as in Comparative Example 1 to prepare a polymerizable composition. Further, using the obtained polymerizable composition, the same procedure was followed as in Example 1 to obtain a cross-linkable resin (initial polymer) and similarly evaluate it. The results are shown in Table 1. Note that in Comparative Example 2 as well, after storage for 24 hours, the polymerization reaction partially proceeded, a rubbery shaped article ended up being formed, the viscosity after storage for 24 hours could not be measured, and furthermore a cross-linkable resin for performing various measurements (polymer after 24 hours) could not be obtained.

Comparative Example 3

Except for not using a polymerization retardant comprised of vinyl diphenyl phosphine when preparing a catalyst solution, the same procedure was followed as in Comparative Example 1 to prepare a polymerizable composition. Further, using the obtained polymerizable composition, the same procedure was followed as in Example 1 to obtain a cross-linkable resin (initial polymer) and similarly evaluate it. The results are shown in Table 1. Note that in Comparative Example 3 as well, after storage for 24 hours, the polymerization reaction proceeded, a hard shaped article ended up being formed, the viscosity after storage for 24 hours could not be measured, and furthermore a cross-linkable resin for performing various measurements (polymer after 24 hours) could not be obtained.

Table 1

Table 1

| | Ex 1 | Ex 2 | Ex 3 | Comp Ex 1 | Comp Ex 2 | Comp Ex 3 |
|---|---|---|---|---|---|---|
| Ruthenium carbene complex structure | 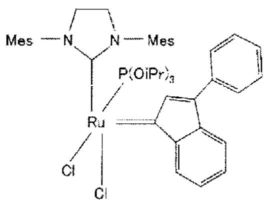 Compound shown in formula (5) | | | 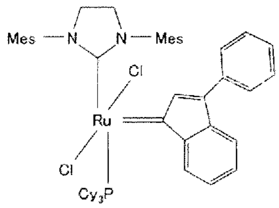 Compound shown in formula (6) | | |
| Cis ratio of ruthenium carbene complex (%) | 99≤ | 99≤ | 99≤ | 1> | 1> | 1> |
| Polymerization retardant | - | - | - | Vinyldiphenyl phosphine | | - |
| Amount of addition | - | - | - | 1 equivalent | 5 equivalents | - |
| Polymerization temperature (°C) | 130 | 110 | 95 | 130 | 130 | 130 |
| Polymerization time (minutes) | 3 | 3 | 3 | 3 | 3 | 3 |
| Initial viscosity (cP) | 690 | 690 | 690 | 690 | 689 | 692 |
| Viscosity after 24 hours (cP) | 770 | 770 | 770 | - | - | - |
| Mw of initial polymer | 82900 | 44600 | 29100 | 83300 | 80200 | 83000 |
| Mw/Mn of initial polymer | 50 | 30 | 23 | 46 | 4 7 | 49 |
| Polymer conversion rate of initial polymer (%) | 99 | 99 | 94 | 98 | 86 | 99 |
| Mw of polymer after 24 hours | 80500 | 42600 | 29000 | - | - | - |
| Mw/Mn of polymer after 24 hours | 4.3 | 3.0 | 2.3 | - | - | - |
| Polymer conversion rate of polymer after 24 hours (%) | 99 | 99 | 95 | - | - | - |

As shown in Table 1, tne polymerizable composition which uses a predetermined ruthenium carbene complex of the present invention had a rate of rise of viscosity after storage at a temperature of 25°C for 24 hours of a low 11 6%, so could give a resin shaped article which had equal characteristics as right after preparation of a polymerizable composition even after storage for 24 hours (Examples 1 to 3).

On the other hand, when using a ruthenium carbene complex other than a predetermined ruthenium carbene

complex of the present invention, in each case, after storage for 24 hours, the polymerization reaction partially proceeded, a shaped article ended up being formed, measurement of the viscosity after storage for 24 hours became impossible and, furthermore, a cross-linkable resin (polymer after 24 hours) for performing various measurements could not be obtained (Comparative Examples 1 to 3). In particular, from the results of Comparative Examples 1 and 2, it was learned that even if using a polymerization retardant, the polymerization reaction partially proceeded after storage for 24 hours.

## Claims

1. A polymerizable composition which contains a cycloolefin monomer and a ruthenium carbene complex expressed by the following general formula (I):

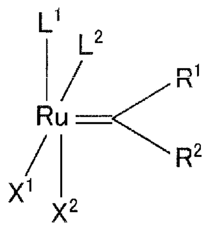

(I)

(in which general formula (I), $R^1$ and $R^2$ respectively independently represent a hydrogen atom, halogen atom, or cyclic or chain $C_1$ to $C_{20}$ hydrocarbon group which may contain a halogen atom, oxygen atom, nitrogen atom, sulfur atom, phosphorus atom, or silicon atom;
$X^1$ and $X^2$ respectively independently represent an anionic ligand;
$L^1$ and $L^2$ respectively independently represent a neutral electron donor ligand;
$L^2$ is a group with a higher three-dimensionally bulk than $L^1$ wherein $L^1$ and $L^2$ are at cis positions with each other;
$R^1$ and $R^2$ may bond with each other to form an aliphatic ring or aromatic ring which may contain a hetero atom; and
$R^1$, $R^2$, $X^1$, $X^2$, $L^1$, and $L^2$ may bond with each other in any combination to form a multidentate chelating ligand).

2. The polymerizable composition as set forth in claim 1 wherein $L^1$ of said ruthenium carbene complex is phosphines expressed by the following general formula (II):

$$PR^7R^8R^9 \qquad (II)$$

(in which general formula (II), $R^7$, $R^8$, and $R^9$ respectively independently represent an alkyl group, alkoxy group, cycloalkyl group, cycloalkyloxy group, phenyl group, phenyloxy group, benzyl group, or benzyloxy group which may contain a substituent).

3. The polymerizable composition as set forth in claim 1 or 2 wherein $L^2$ of said ruthenium carbene complex is a carbene compound.

4. The polymerizable composition as set forth in any one of claims 1 to 3 wherein the cis ratio which is the molar ratio of content of cis forms where $L^1$ and $L^2$ are positioned at the cis positions in said ruthenium carbene complex, is 90% or more.

5. The polymerizable composition as set forth in any one of claims 1 to 4 wherein the rate of rise of viscosity after storage at a temperature of 25°C for 24 hours is 50% or less.

6. The polymerizable composition as set forth in any one of claims 1 to 5 which further contains a cross-linking agent.

7. A cross-linkable resin shaped article obtained by bulk polymerizing the polymerizable composition as set forth in any one of claims 1 to 6.

8. A cross-linked resin shaped article obtained by bulk polymerizing and cross-linking the polymerizable composition as set forth in any one of claims 1 to 6.

**9.** A laminate at least having a layer comprised of the cross-linkable resin shaped article as set forth in claim 7 or a layer comprised of the cross-linked resin shaped article as set forth in claim 8.

**INTERNATIONAL SEARCH REPORT**

International application No.
PCT/JP2012/055996

A. CLASSIFICATION OF SUBJECT MATTER
*C08G61/06*(2006.01)i, *B32B27/00*(2006.01)i

According to International Patent Classification (IPC) or to both national classification and IPC

B. FIELDS SEARCHED

Minimum documentation searched (classification system followed by classification symbols)
C08G61/06, B32B27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2002-524250 A (University of New Orleans Foundation),<br>06 August 2002 (06.08.2002),<br>claims; entire text<br>& JP 2010-188341 A & US 6316380 B1<br>& US 6403802 B1 & US 2004/0210055 A1<br>& US 7622590 B1 & US 2010/0160642 A1<br>& EP 2116302 A1 & WO 2000/015339 A1<br>& WO 2001/066248 A2 & DE 69941219 D<br>& AU 5817599 A & CA 2343798 A<br>& TW 536427 B & AT 438462 T | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 June, 2012 (11.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | International application No. PCT/JP2012/055996 |
|---|---|

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-510807 A (California Institute of Technology), 21 September 1999 (21.09.1999), claims; entire text & US 5831108 A & US 6111121 A & US 6211391 B1 & EP 1130025 A1 & EP 1375506 A1 & WO 1997/006185 A1 & DE 69631769 D & DE 69631769 T & DE 69636060 D & DE 69636060 T & AU 6688396 A & AT 260938 T & AT 323710 T & ES 2263884 T & CN 1198752 A & CN 1637008 A | 1-9 |
| A | JP 2004-244609 A (Nippon Zeon Co., Ltd.), 02 September 2004 (02.09.2004), claims; entire text & US 2006/0211834 A1 & US 2007/0191563 A1 & US 2009/0036614 A1 & EP 1535941 A1 & WO 2004/003052 A1 & DE 60316310 D & DE 60316310 T & CN 1675278 A & TWB 00I329654 | 1-9 |
| A | JP 2008-184565 A (Nippon Zeon Co., Ltd.), 14 August 2008 (14.08.2008), claims; entire text (Family: none) | 1-9 |
| A | WO 2009/123209 A1 (Nippon Zeon Co., Ltd.), 08 October 2009 (08.10.2009), claims; entire text (Family: none) | 1-9 |
| A | Organometallics, 2010.05.11, 29, 2547-56 | 1-9 |
| A | Inorg. Chem., 1982, 21, 1037-40 | 1-9 |

Form PCT/ISA/210 (continuation of second sheet) (July 2009)

INTERNATIONAL SEARCH REPORT

International application No.
PCT/JP2012/055996

Claims 1-9

It is considered that the problem which the present invention is to solve is to provide "a polymerizable composition which has a long pot life and stable polymerizability, and a crosslinkable molded resin, a crosslinked molded resin, and a laminate which are obtained using the polymerizable composition" (see [0009] of the description).

Meanwhile, of the claims of the present invention, the polymerizable compositions shown in examples, etc. in the description as polymerizable compositions capable of actually solving the problem are limited to polymerizable compositions in which "the ruthenium carbene complex represented by general formula (I)" is the complex in which "$L^1$" and "$L^2$" are a combination of specific groups and "the cis proportion, which is the molar proportion of the cis isomer contained therein in which $L^1$ and $L^2$ are located in the cis position relative to each other, is 90% or higher".

In technical fields relating to chemical substances, it is generally difficult to predict the structure, composition, etc. of a substance from the function, properties, etc. of the substance. In view of this fact, the inventions in claims 1-9 cannot be considered to be disclosed in the meaning of PCT Article 5. These claims cannot be considered to be sufficiently supported in the meaning of PCT Article 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2004244609 A
- WO 2009123209 A
- JP 2008184565 A
- JP 11510807 A
- JP 2002524250 A
- JP 2009504401 A